# EUROPÄISCHE PATENTSCHRIFT

(11) **EP 1 917 378 B1**
(45) Veröffentlichungstag und Bekanntmachung des Hinweises auf die Patenterteilung: **12.11.2008**
(21) Anmeldenummer: 06776922.4
(22) Anmeldetag: 17.08.2006
(51) Int. Cl.: C23C 4/12, C23C 4/10, B29C 43/46, B23K 9/04

(54) **WALZE SOWIE VERFAHREN ZU DEREN HERSTELLUNG**
ROLL AND METHOD FOR THE PRODUCTION THEREOF
CYLINDRE ET PROCEDE DE FABRICATION ASSOCIE

(30) Priorität: 23.08.2005 DE 102005040015
(43) Veröffentlichungstag der Anmeldung: 07.05.2008
(73) Patentinhaber: Brückner Maschinenbau GmbH, 83313 Siegsdorf (DE)
(72) Erfinder: KITTSTEINER, Hans-Jürgen, 83324 Ruhpolding (DE)
(74) Vertreter: Flach, Dieter Rolf Paul
(86) Internationale Anmeldenummer: PCT/EP2006/008119
(87) Internationale Veröffentlichungsnummer: WO 2007/022912

(56) Entgegenhaltungen:
- WO-A-97/15720
- DE-A1- 4 032 615
- JP-A- 6 025 815
- JP-A- 7 088 509
- JP-A- 8 089 873
- DATABASE WPI Section Ch, Week 199919 Derwent Publications Ltd., London, GB; Class M,Seite 11, AN 1999-215636 XP002407684 & CN 1 202 539 A (W.WANG) 23. Dezember 1998 (1998-12-23)

## Beschreibung

Die Erfindung betrifft eine Walze, insbesondere eine Umlenkwalze, eine Kühlwalze und/oder eine Flammbehandlungswalze sowie ein Verfahren zur Herstellung einer derartigen Walze.

Walzen, d.h. insbesondere Kühlwalzen und/oder Flammbehandlungswalzen, werden beispielsweise bei der Kunststofffolienproduktion mehrfach eingesetzt und benötigt. Es handelt sich dabei in der Regel um thermisch sowie chemisch hoch beanspruchte Walzen, die von daher mit entsprechend korrosionsbeständigen Schutzschichten versehen sein müssen. Gleichzeitig wird bei derartigen Flammbehandlungswalzen von innen her eine Kühlung realisiert, wobei sichergestellt sein soll, dass die Kühlwirkung am Walzenumfang möglichst optimal wirkt, um den Kunststofffilm ausreichend zu kühlen und eine thermische Überhitzung zu vermeiden.

Von daher ist bereits vorgeschlagen worden, Flammbehandlungswalzen mit einer Blechummantelung zu versehen, die beispielsweise nur aus einem wenige Millimeter umfassenden dicken Edelstahlblech besteht. Dieses Edelstahlblech wird unter bestimmter lateraler Vorspannung auf den Walzenkörper z.B. aus Baustahl aufgebracht. Bekannt sind auch Flammbehandlungswalzen, die einen Außenmantel umfassen, der vollständig aus Edelstahl gefertigt ist. Beide vorstehend genannten Ausführungen sind zwar korrosionsbeständig, haben jedoch den Nachteil, dass das relativ dicke Edelstahlblech mit deutlich reduzierter Wärmeleitung gegenüber herkömmlichem Baustahl nur eine reduzierte Kühlwirkung aufweist. Als weiteren Nachteil ergibt sich, dass die Blechummantelung nicht immer vollständig auf dem Grundkörper der Walze aufliegt, wodurch der Wärmefluss ebenfalls behindert und die Kühlwirkung eingeschränkt wird. Schließlich sind die Herstellkosten derartiger Walzen beträchtlich.

Darüber hinaus ist es bekannt, für die Kühlung einer in einem Herstell- oder Oberflächenbehandlungsprozess erwärmten Kunststofffolie (insbesondere bei der Herstellung von mono- oder biaxial verstreckten Polypropylenfilm) Flammbehandlungswalzen mit unterschiedlichen Oberflächen einzusetzen. Verwendet werden beispielsweise Flammbehandlungswalzen mit Oberflächen, die aus einer Mehrschichtverchromung, z.B. einer Verchromung auf einer Nickelschicht, sowie metallischen oder carbidischen Hochgeschwindigkeits- oder Flammspritzschichten bestehen. All diese Oberflächenausführungen bergen eine potentielle Beschädigungsgefahr für die herzustellenden Kunststofffolien in sich, und zwar aufgrund der an der Oberflächenstruktur ausgebildeten, teilweise sehr kleinen Poren. Diese Poren in der Schutzoberfläche einer Walze bedingen jedoch eine korrosive Unterwanderung der Schutzoberfläche mit nachfolgender teilweiser Schichtablösung. Ebenso können Kratzer und Schnitte von Messern, die zum Reinigen der Walzen eingesetzt werden, häufig zu Korrosionsansätzen führen, die die Schutzschicht verletzen und diese deshalb undicht wird.

Aufgeschweißte Korrosionsschutzbleche zu verwenden, ist grundsätzlich bekannt. So beschreibt die CH 673 878 A5 eine Hohlwalze zur Führung von Materialbahnen, wobei der Walzenaußenmantel aus einem rostfreien Material als flächige Materialbahn auf das Außenrohr aufgezogen wird. Dabei sollen die beiden Längsseiten mittels einer Schweißnaht miteinander verbunden werden.

Gemäß der DE 691 14 605 T2 wird eine beheizbare Walze beschrieben, die eine äußere Beschichtungsfläche aufweist, die beispielsweise aus einem durch Schweißen fixierten Metallblech besteht.

Maßnahmen, um Walzen grundsätzlich korrosionsfester oder verschleißfester zu gestalten, sind durch eine Reihe weiterer Vorveröffentlichungen bekannt, beispielsweise durch EP 1 022 351 A1, EP 0 990 713 A1, WO 03/087422 A1, DE 690 16 161 T2, DE 696 13 371 T2, DE 42 35 499 A1, DE 696 08 294 T2, DE 40 18 890 A1, DE 41 24 423 A1, DE 32 23 908 A1 und DE 38 40 696 A1.

Ferner ist es grundsätzlich bekannt, Walzen korrosions- und/oder verschleißfester zu gestalten, beispielsweise durch Flammspritzen oder Schweißen. Dies ist beispielsweise aus der JP 08 089873 A, JP 07 088509 A, "DATABASE WPI Section Ch, Week 199919 Derwent Publications Ltd., London, GB; Class M, Seite 11, AN 1999-215636 XP002407684 & CN 1 202 539 A (W.WANG) 23. Dezember 1998 (1998-12-23)" sowie DE 40 32 615 A1 als bekannt zu entnehmen.

Aufgabe der vorliegenden Erfindung ist es, eine verbesserte Walze, insbesondere eine verbesserte Kühl- und/oder Flammbehandlungswalze sowie ein verbessertes Verfahren zur Herstellung einer derartigen Walze, insbesondere eine verbesserte Beschichtung für thermisch und/oder chemisch hoch beanspruchte Walzen zu schaffen, deren Walzenoberfläche sehr gute Korrosionsschutzeigenschaften aufweist, wenn derartige Walzen in einer thermisch stark belasteten und/oder in einer chemisch und/oder physikalisch aggressiven Umgebung eingesetzt werden, beispielsweise auch bei der Herstellung einer mono- oder biaxialen verstreckten Kunststofffolienbahn, in einer Folienreckanlage. Ferner soll im Rahmen der Erfindung eine Verbesserung durch die Verwendung einer erfindungsgemäßen Walze herbeigeführt werden können.

Die Aufgabe wird bezüglich der Vorrichtung entsprechend den im Anspruch 1, bezüglich des Verfahrens entsprechend den im Anspruch 13 und bezüglich der Verwendung einer erfindungsgemäßen Walze entsprechend den im Anspruch 19 angegebenen Merkmalen gelöst. Vorteilhafte Ausgestaltungen der Erfindung sind in den Unteransprüchen angegeben.

Die erfindungsgemäße Walze, insbesondere in Form einer Kühlwalze oder einer Flammbehandlungswalze, weist eine Walzenoberfläche auf, die zu einer deutlichen Verlängerung der durchschnittlichen Lebensdauer derartiger Walzenoberflächen führt. Die erfindungsgemäße Walze mit der kostengünstig herstellbaren Walzenoberfläche kann dabei dauerhaft in einem Produktionsprozess beispielsweise in Folienreckanlagen eingesetzt werden, ohne dass thermomechanische Spannungen in Verbindung mit den korrosiven Rauchgasen einer Flammbehandlungsstation zum Schichtversagen führen, also zum Unbrauchbarwerden der obersten Walzenschicht. Als weiterer Vorteil kommt hinzu, dass bei der erfindungsgemäßen Lösung die Korrosionsschutzoberfläche auch auf schlanken Flammbehandlungswalzen aufgebracht werden kann, ohne dass im Beschichtungsprozess schädliche Eigenspannungen entstehen, die zu einem dauerhaften Verzug des Flammbehandlungswalzenkörpers führen würden.

Die erfindungsgemäße Walze umfasst dabei eine Kombinationsschichtanordnung mit zumindest drei in Axialrichtung der Walze versetzt zueinander liegenden und jeweils in Umfangsrichtung verlaufenden Mantelzonen, nämlich eine mittlere Mantelzone sowie zwei den Stirnseitenbereichen der Walze näher liegende oder dazu benachbart liegende Randzonen. Die Randzonen sind dabei gegenüber der Mittelzone unterschiedlich hergestellt und/oder ausgebildet.

Eine Walze mit drei unterschiedlichen, in Axialrichtung versetzt liegenden Umfangsbereichen, ist zwar grundsätzlich aus der DE 42 35 499 A1 bekannt geworden. Es handelt sich hierbei aber um eine Mahlwalze, insbesondere für eine Gutbettwalzenmühle zur Zerkleinerung von relativ sprödem Mahlgut. Dazu ist vorgesehen, dass die Walze im mittleren Bereich durch Auftragsschweißung von Hartwerkstoff eine harte äußere Verschleißschicht erhält, wobei in den sogenannten Eckenbereichen (unmittelbar angrenzend an den Stirnflächen der Walze) durch Gitterschweißtechnik Hartwerkstoffe in Form von Girlanden aufgeschweißt sind.

Demgegenüber zeichnet sich die erfindungsgemäße Walze dadurch aus, dass die Randzonen eine direkt auf den Walzen-Grundkörper aufgeschweißte metallische Korrosionsschicht oder eine direkt auf dem Walzen-Grundkörper aufgeschweißte metallische Oberfläche in Form eines Korrosionsschutzbleches umfassen. Dabei wird die aufgeschweißte Korrosionsschutzschicht oder das aufgeschweißte Korrosionsschutzblech nur im Randbereich aufgebracht.

Die erfindungsgemäße Walze weist also spezifische Vorzüge auf und lässt sich dabei gleichwohl aufgrund der spezifischen Schutzschicht in den Randzonen in einer Umgebung einsetzen, in welcher chemisch und/oder physikalisch aggressive Fluide und/oder insbesondere heiße Gase, beispielsweise auch Flammen mit oder ohne oxidierende und/oder reduzierende Gase im Bereich der Flammen vorhanden sind.

Die Randzone besteht aus einer korrosionsbeständigen Schutzbeschichtung, beispielsweise in Form einer aufgeschweißten metallischen Korrosionsschutzschicht. Demgegenüber kann die Oberfläche der Mittelzone beispielsweise einer der innengekühlten Flammbehandlungswalzen mit einer metallischen und/oder carbidischen Flammspritzschicht (thermisch gespritzte Oberflächenschicht) beschichtet sein.

Als Beschichtungsmaterial für die geschweißte Oberfläche werden insbesondere schweißbare korrosionsbeständige und/oder hochwarmfeste Stähle und Legierungen auf Eisen-, Nickel- oder Cobaltbasis verwendet. Beispielsweise kommen chrom- und/oder nickelhaltige Stahllegierungen oder Eisen-, Nickel- oder Cobaltbasislegierungen in Frage, einschließlich der als sogenannte Superlegierungen bekannten Legierungen, insbesondere wenn diese die erforderliche Schweißbarkeit aufweisen. Derzeit bevorzugte Beispiele sind Stähle wie 316L, 317L oder Legierungen wie Inconel 605, Inconel 622, Inconel 625, Inconel 686, Inconel 718, Inconel 738 oder Hastelloy C22, Hastelloy C276, Hastelloy C2000, Hastelloy X oder Metco 18C, Metco 15E, Metco 15F oder Triballoy 400, Triballoy 800 oder Stellit F, Stellit 6 Stellit 12 oder Superferrit 446 oder Carpenter 20, Carpenter 22 oder Haynes 25. Alle genannten Stähle und Legierungen können auch in partikelverstärkter Form verwendet werden, wobei als Partikelverstärkungen keramische Hartstoffe, wie sie aus der Hartmetallherstellung bekannt sind, und Feuerfeststoffe zum Einsatz kommen. Insbesondere werden zur Partikelverstärkung carbidische, nitridische oder boridische Pulvermaterialien verwendet, wie z.B. Cr₃C₂, nitridische Pulver wie TiN, ZrN, carbidische Pulver wie WC, TiC oder boridische Pulver wie TiB₂, ZrB₂. Eine solche Partikelverstärkung ermöglicht es, die Verschleißbeständigkeit der Beschichtung zu erhöhen. Als Schweißverfahren kommen neben MAG (Metall-Aktivgas-Schweißen) oder WIG (Wolfram-Inertgas-Schweißen) insbesondere PTA (Plasma Transfer Arc Welding) oder ein Laserauftragschweißen oder ein Laserdensifizieren in Frage. Das Verfahren zur Herstellung der Walze, beispielsweise in Form einer Kühl- und/oder Flammbehandlungswalze, umfasst also die Herstellung einer Oberflächen- und/oder Mantelschicht auf dieser Walze mittels eines thermischen Spritzverfahrens, insbesondere mittels Flammspritzen, Lichtbogenspritzen, Plasmaspritzen, Flammschockspritzen, Hochgeschwindigkeitsflammspritzen, Flammspritzschweißen oder einem Kaltspritzverfahren, insbesondere Cold-Spraying sowie eine metallische Schutzbeschichtung, insbesondere eine Korrosionsschicht und/oder ein Korrosionsschutzblech im äußeren Randbereich, die aufgeschweißt wird. Die zuvor beispielhaft aufgezählten Verfahren sind dem Fachmann auf dem Gebiet des thermischen Spritzens alle wohlbekannt und brauchen daher im Rahmen dieser Anmeldung nicht näher erläutert zu werden.

Als Beschichtungsmaterialien für die flammgespritzte Oberfläche können grundsätzlich die gleichen Materialien verwendet werden, d.h. z.B. nickel- oder chromhaltige Stahllegierungen beispielsweise 316L, 317L oder die korrosionsbeständigen und/oder hochwarmfesten Eisen-, Nickel- oder Cobaltbasislegierungen wie Inconel 605, Inconel 622, Inconel 625, Inconel 686, Inconel 718, Inconel 738 oder Hastelloy C22, Hastelloy C276, Hastelloy C2000, Hastelloy X oder Metco 18C, Metco 15E, Metco 15F oder Triballoy 400, Triballoy 800 oder Stellit F, Stellit 6 Stellit 12 oder Superferrit 446 oder Carpenter 20, Carpenter 22 oder Haynes 25 oder verwandte Stähle und Legierungen, wobei wiederum eine Verstärkung durch die oben genannten verstärkenden Pulvermaterialien, insbesondere in Form carbidischer Pulver wie z.B. CrC, TiC oder WC, möglich ist und je nach Verwendungszweck der Walzen zum Einsatz kommen kann. Da die Schweißbarkeit von geringerer Bedeutung ist, können außerdem Carbidschichten verwendet werden, bei denen carbidische Pulvermaterialien in Form von z.B. CrC, WC oder TiC in einer geeigneten metallischen Matrix (Co, Ni, CoCr oder NiCr) eingebettet sind. Als Flammspritzverfahren kommen neben dem herkömmlichen Flammspritzen bevorzugt Hochgeschwindigkeitsflammspritzen oder Detonationsspritzen zum Einsatz.

Die mittlere Zone mit der metallischen oder carbidischen Flammspritzschicht weist bevorzugt eine axiale Länge auf, die kleiner ist als die über die Flammbehandlungswalze zu behandelnde Folienbahn. Mit anderen Worten sollen die Randzonen eine Axiallänge aufweisen oder von der Flammbehandlungswalzen-Stirnseite in einem axialen Abstand enden, in welchem bereits eine Filmumschlingung stattfindet. Bevorzugt ist also die axiale Länge der Randzonen größer und/oder endet in einem axialen Abstand von der jeweiligen Stirnseite der Flammbehandlungswalze in einem Bereich, bei welchem ein herzustellender Kunststofffolienfilm beispielsweise bei der Kunststofffolienproduktion die Walzenoberfläche von seinem Anlagebereich bereits überdeckt.

Mittels einer so aufgebauten Walze oder Flammbehandlungswalze ist es nunmehr möglich, eine kostengünstige Walzenoberfläche zu schaffen, die z.B. dauerhaft in einem Produktionsprozess von Folienreckanlagen eingesetzt werden kann, ohne dass thermomechanische Spannungen in Verbindung mit den korrosiven Rauchgasen einer Flammbehandlungsstation zum Schichtversagen führen.

Denn beispielsweise bei der Herstellung einer Kunststofffolienbahn bedeckt diese nicht die gesamte Schutzoberfläche einer erfindungsgemäßen Walze (beispielsweise einer vorzugsweise gekühlten Flammbehandlungswalze, die z.B. in einer Flammbehandlungsstation eingesetzt wird). Am Rand der Folienbahn kann die Flamme eines Gasbrenners direkt auf die Flammbehandlungswalze brennen. Hierbei können Rissbildungen infolge hoher thermomechanischer Spannungen aus der direkten Beflammung der Walzenoberfläche in Verbindung mit den korrosiven Eigenschaften des im Beflammungsprozess entstehenden Rauchgases die Walzenoberfläche schädigen oder zu deren Versagen führen. Erfindungsgemäß ist von daher in diesem freien Randbereich die Walzenoberfläche mit einer aufgeschweißten metallischen Korrosionsschutzschicht versehen. Bevorzugt reicht die vorstehend erwähnte Randschicht jedoch weiter in die Walzenmitte, so dass sich noch zumindest ein überlappender Bereich ergibt, bei welchem der Folienrand auf dieser äußeren Randschicht die Walze umschlingt. Diese stoffschlüssige Verbindung von Schutzoberfläche und Walzen-Grundkörper widersteht den thermomechanischen Spannungen aus der möglichen direkten Beflammung der Walzenoberfläche sowie den korrosiven Gasen, die direkt zur Walzenoberfläche gelangen können. Innerhalb der Breite einer betriebenen Flammbehandlungsstation jedoch ist die Walzenoberfläche der innengekühlten Walze immer von der Folienbahn abgedeckt und somit nicht direkt der Beflammung ausgesetzt. Genau in diesem Bereich wird vorzugsweise zumindest in einer Axiallänge von zumindest 60% bis 80% oder beispielsweise auch bis zumindest 90% der Folienbreite die erwähnte metallische oder carbidische Flammspritzschicht verwendet, die eine kostengünstige Beschichtung erlaubt. Zudem werden mit diesem Beschichtungsverfahren gegenüber dem Aufschweißen deutlich reduzierte Eigenspannungen in den Walzenkörper eingebracht und dieser somit vor thermisch bedingtem Verzug bewahrt, der sich im Randbereich in der Regel bei sehr schlanken Flammbehandlungswalzen kaum auswirkt.

In einer bevorzugten Ausführungsform der Erfindung werden sowohl die Randschichten als auch die Mittelschicht nach Abschluss der Walzenbeschichtung gemeinsam auf die erforderliche Oberflächengüte (Rauigkeit, Rundlaufgenauigkeit) hin überschliffen.

Das Ausführungsbeispiel der Erfindung wird nachfolgend unter Bezugnahme auf eine Figur näher erläutert.

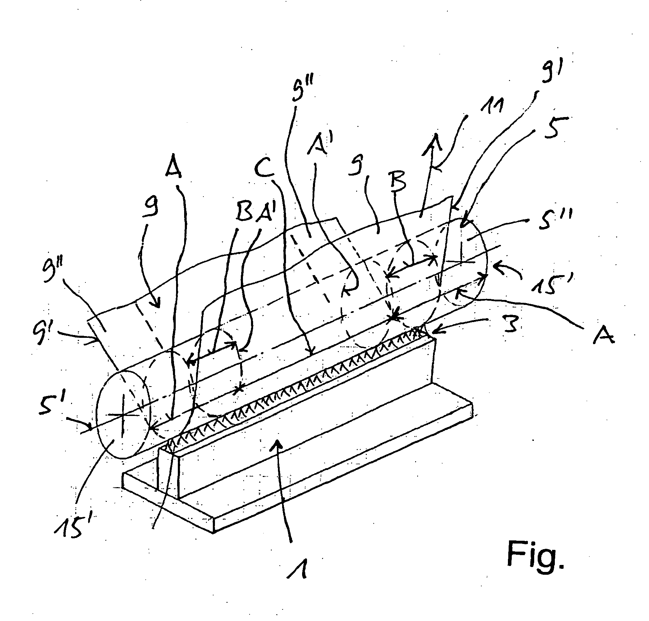

In der beigefügten Figur ist in schematischer perspektivischer Darstellung eine Flammbehandlungsstation 1 angedeutet, die in axialer Richtung verlaufend eine streifen- oder linienförmigen Brennereinrichtung 3 umfasst. Parallel zu dieser streifen- oder linienförmigen Brennereinrichtung 3 ist oberhalb dazu eine Flammbehandlungswalze 5 vorgesehen, die um ihre Achse 5' rotiert.

Die Flammbehandlungswalze 5 wird beispielsweise in einer mono- oder biaxialen Folienreckanlage eingesetzt, z.B. bei der Folienherstellung. In der Figur ist dazu ausschnittsweise eine Folienbahn 9 gezeigt, die im gezeigten Ausführungsbeispiel von oben links kommend in einem Umschlingungswinkel unterhalb der Flammbehandlungswalze 5 am Mantelumfang 5" der Flammbehandlungswalze 5 anliegend herumgeführt und dann wiederum mit einer nach oben gerichteten Komponente weitergeleitet wird. Die Manteloberfläche 5" mit der anliegenden Kunststofffolienbahn 9 befindet sich somit mit einer parallel zur Rotationsachse 5' verlaufenden Axiallinie direkt oberhalb der streifen- oder linienförmigen Brennereinrichtung 3.

Die Abzugsrichtung 11 der Folienbahn 9 verläuft somit quer, d.h. im gezeigten Ausführungsbeispiel senkrecht zur Rotationsachse 5' der Flammbehandlungswalze 5 und somit quer bzw. senkrecht zur axialen Ausrichtung der Flammbehandlungsstation 1, d.h. also quer oder senkrecht zur streifen- oder linienförmigen Brennereinrichtung 3.

Wie aus der schematischen Darstellung zu ersehen ist, weist die Brennereinrichtung 3 vorzugsweise eine axiale Länge auf, die in etwa der Breite der Kunststofffolienbahn 9 entspricht.

Im Bereich der Folienbahn 9 wird die Ober- oder Mantelfläche 5" der innengekühlten Flammbehandlungswalze 5 (wobei im vorliegenden Ausführungsbeispiel die Kühleinrichtung selbst nicht näher dargestellt ist und insoweit auf vorbekannte Lösungen verwiesen wird) immer von der Folienbahn 9 abgedeckt und ist somit der direkten Beflammung nicht ausgesetzt. Von daher ist eine mittlere Zone C oder ein mittlerer Bereich C der umlaufenden Manteloberfläche 5" der Flammbehandlungswalze mit einer kostengünstig herstellbaren metallischen und/oder carbidischen Flammspritzschicht versehen, d.h. beschichtet.

Ferner ist benachbart zu den Stirnseiten 15' bzw. von der Mittelzone C aus betrachtet diesen Stirnseiten 15' näherliegend jeweils eine Randschicht, d.h. eine Randzone A der in Rotationsrichtung umlaufenden Mantelfläche 5" vorgesehen, in welcher die Walzenoberfläche anders ausgebildet und/oder hergestellt ist, als die Walzenoberfläche in der Mittelzone C. Im Bereich dieser Randschicht oder Randzone A am Ende der Flammbehandlungswalze 5 besteht die Walzenoberfläche aus einer aufgeschweißten metallischen Schutzschicht. Hierdurch wird eine stoffschlüssige Verbindung zwischen der Schutzoberfläche und dem Walzen-Grundkörper hergestellt, wobei diese stoffschlüssige Verbindung thermomechanische Spannungen aus der möglichen direkten Beflammung der Walzenoberfläche widersteht.

Bevorzugt weist die Randzone A eine axiale Länge auf und/oder endet in einem axialen Abstand A ausgehend von den jeweils gegenüberliegenden Stirnseiten 15 derart, dass der der mittleren Zone C zugewandt liegende Rand nicht exakt am Folienrand 9' endet, sondern diese Randzone A um einen Randzonenabschnitt B in Richtung mittlerer Zone C vergrößert ist. Somit liegt der umlaufende Rand A' der Randzone A im Bereich der Flammstation 1 und damit unterhalb der Folienbahn 9. Mit anderen Worten ist die Randzone A nicht nur bis zum Rand der Folienbahn 9' oder der Flammstation 1 bemessen, sondern ragt um die Randzone B bis unterhalb der Folienbahn 9, so dass es hier entsprechend dem Randzonenbereichsabschnitt B zu einer Überdeckung mit dem Randbereich 9" der Folienbahn führt, wie dies in der Zeichnung dargestellt ist.

Die axiale Länge der Mittelzone oder Mittelschicht C sollte üblicherweise zumindest 60%, insbesondere zumindest 70% oder 80% und ggf. zumindest 90% der Breite der zu behandelnden Folienbahn 9 und/oder der Brennereinrichtung 3 betragen. Mit anderen Worten wird die axiale Länge der Mittelschicht C in einer bevorzugten Ausführungsform zumindest 50%, insbesondere zumindest 60%, zumindest 70% oder zumindest 80% der axialen Länge einer Flammbehandlungswalze 5 ausmachen.

Von daher sollte die axiale Länge der Randzone bzw. der Abstand, an dem die Randzonen A vom stirnseitigen Ende der Walze enden, bevorzugt zumindest 2%, insbesondere zumindest 5 %, 10%, 15% oder zumindest 20% der Breite der Folienbahn betragen. Bezogen auf die axiale Länge einer Flammbehandlungswalze kann dieses Maß zumindest 10%, 20% oder zumindest 30% der axialen Länge der Walze 5 betragen.

Eine erfindungsgemäße Flammbehandlungswalze wird so hergestellt, dass auf den Randzonen des Flammbehandlungswalzen-Grundkörpers eine metallische Schutzschicht aufgeschweißt wird, um eine stoffschlüssige Verbindung herzustellen. Diese aufgeschweißte metallische Schutzschicht ist also zumindest in der Randzone A und vorzugsweise einschließlich des Bereiches B vorgesehen. In der angrenzenden Mittelzone C wird, wie ausgeführt, die metallische oder carbidische Flammspritzschicht aufgebracht (beschichtet), wobei beide Schichten nach Abschluss der Walzenbeschichtung gemeinsam auf die erforderliche Oberflächengüte zur Herstellung einer gemeinsamen Rauigkeit, Rundlaufgenauigkeit etc. hin überschliffen werden.

Als Beschichtungsmaterialien für die geschweißte Oberfläche können die weiter oben genannten schweißbaren chrom- oder nickelhaltigen Stahllegierungen oder die korrosionsfesten und/oder hochwarmfesten Eisen-, Nickel- oder Cobaltbasislegierungen verwendet werden, jeweils auch in partikelverstärkter Form. Beschichtungsmaterialien für die flammgespritzte Oberfläche können ebenfalls die bereits eingangs genannten Stähle und Legierungen sein, insbesondere nickel- und chromhaltige Stahllegierungen sein wie z.B. 316L, 317L oder die korrosionsbeständigen und/oder hochwarmfesten Eisen-, Nickel- oder Cobaltbasislegierungen Legierungen wie Inconel 605, Inconel 622, Inconel 625, Inconel 686, Inconel 718, Inconel 738 oder Hastelloy C22, Hastelloy C276, Hastelloy C2000, Hastelloy X oder Metco 18C, Metco 15E, Metco 15F oder Triballoy 400, Triballoy 800 oder Stellit F, Stellit 6 Stellit 12 oder Superferrit 446 oder Carpenter 20, Carpenter 22 oder Haynes 25 oder Materialien mit ähnlichen Eigenschaften, wiederum jeweils ggf. verstärkt insbesondere durch carbidische Pulver wie z.B. CrC, TiC oder WC, oder Carbidschichten, bei denen carbidische Pulvermaterialien in Form von z.B. CrC, WC oder TiC in einer geeigneten metallischen Matrix (Co, Ni, CoCr oder NiCr) eingebettet werden.

Im Hinblick auf die vorstehend gemachten Ausführungen kann also festgehalten werden, dass gemäß der vorliegenden Erfindung die Schutzbeschichtung eine nickel- und/oder chromhaltige Stahllegierung und/oder eine schweißbare Stahllegierung 316L, 317L und/oder die korrosionsbeständigen und/oder hochwarmfesten Eisen-, Nickel- oder Cobaltbasislegierungen Legierungen wie Inconel 605, Inconel 622, Inconel 625, Inconel 686, Inconel 718, Inconel 738 oder Hastelloy C22, Hastelloy C276, Hastelloy C2000, Hastelloy X oder Metco 18C, Metco 15E, Metco 15F oder Triballoy 400, Triballoy 800 oder Stellit F, Stellit 6 Stellit 12 oder Superferrit 446 oder Carpenter 20, Carpenter 22 oder Haynes 25, und/oder einen rostbeständigen und/oder einen säurebeständigen und/oder laugebeständigen Stahl aus der Werkstoffgruppe umfassend die Stähle 1.4301, 1.4303, 1,4401, 1.4404, 1.4406, 1.4438, 1.4505, 1.4506, und/oder einen karbidischen und/oder keramischen Werkstoff, insbesondere CrC, TiC, TaC, Cr₃C₂, Fe₃C, WC, Diamant, Niobiumcarbid, Vanadiumcarbid, und/oder Al₂O₃, Cr₂O₃, TiO₂, ZrO₂, und/oder ein Borid und/oder ein Nitrid, insbesondere cBN (kubisches Bornitrid) oder hBN (hexagonales Bornitrid) umfasst. Insbesondere im Falle Flammbehandlungs- und/oder Kühlwalze, insbesondere auch zum Herstellen einer Kunststofffolienbahn in einer Reckanlage, kann die Oberfläche der Randzone der Walze in Form eines Schutzbleches aus einem rost- und säurebeständigem Stahl 1.4301, 1.4303, 1,4401, 1.4404, 1.4406, 1.4438, 1.4505, 1.4506 oder ähnlichen Stählen dieser Werkstoffgruppe bestehen oder diese umfassen. Dem Fachmann sind die vorgenannten Stähle bzw. alle weiteren Stähle, die dieser Gruppe von Stähle zugeordnet sind in allen ihren Eigenschaften wohlbekannt, so dass sich eine eingehende Beschreibung dieser Werkstoffe hier erübrigt.

Dabei kann die gespritzte Oberflächenschicht eine nickel- und/oder chromhaltige Stahllegierung umfassen, und/oder eine Stahllegierung 316L oder C276 umfassen, und/oder einen rostbeständigen und/oder einen säurebeständigen Stahl aus der Werkstoffgruppe umfassend die Stähle 1.4301, 1.4303, 1,4401, 1.4404, 1.4406, 1.4438, 1.4505, 1.4506 umfassen, und/oder eine mittels einem karbidischem und/oder keramischem Pulver gespritzte Oberflächenschicht, insbesondere eine mittels CrC, TiC, TaC, Cr₃C₂, Fe₃C, WC, Diamant, Niobiumcarbid, Vanadiumcarbid, und /oder Al₂O₃, Cr₂O₃, TiO₂, ZrO₂, und/oder einem Borid und/oder einem Nitrid, insbesondere cBN oder hBN, gespritzte Oberflächenschicht umfassen.

Bevorzugt umfasst die Oberflächenschicht ein Element aus der Gruppe der Elemente bestehend aus C, Cr, Mn, Fe, Mo, S, P, Y, Si, Hf, Pa, Re, Pt, Co, Ni, und bildet somit insbesondere eine Gleitschicht und/oder eine Hartschicht, die der Oberflächenschicht des Werkstücks insbesondere sehr gute tribologische Eigenschaften und/oder eine besonders gute Härte gegen mechanische Belastungen verleiht, wie zum Beispiel bereits in der EP 1 022 351 A1 gezeigt.

Ebenso kann die Oberfläche der Walze aber auch eine Oberflächenschicht ZrO₂ und/oder YO₂, insbesondere mit Yttrium stabilisiertes ZrO₂-8%Y₂O₃, und/oder ZrSiO₄ und/oder SiO₂ und/einem Lanthanoxid und/oder Sc₂O₃ umfassen, und ist insbesondere eine Wärmedämmschicht. Entsprechende Wärmedämmschichten und Verfahren zu deren Herstellung sind z.B. in der EP 0990713 oder in der WO03/087422 bereits ausführlich beschrieben, deren Offenbarungen hiermit ebenfalls in die vorliegende Anmeldung vollumfänglich aufgenommen wird.

Bei insbesondere sehr langdimensionierten Flammbehandlungswalzen 5, die besonders groß vor allem im Verhältnis zur Länge der Brennerstation 1 oder der Brennereinrichtung 3 sind, kann zwischen den Stirnseiten 15 der Flammbehandlungswalze und der nach innen versetztliegenden Randzone A ggf. nochmals eine weitere Randzone vorgesehen sein, die ggf. mit weniger aufwendigen und teuren Schutzschichten versehen und/oder gestaltet ist, da eventuell in diesen außenliegenden Abschnitten der Flammbehandlungswalze benachbart zu den Stirnseiten nicht mehr so aggressive Umgebungsbedingungen herrschen.

Im Rahmen der Erfindung kann die Oberfläche der Randzone (A, B) in Form eines Schutzbleches aus einem rost- und säurehaltigem Stahl 1.4301, 1.4303, 1.4401, 1.4404, 1.4406, 1.4438, 1.4505, 1.4506 oder ähnlichen Stählen dieser Werkstoffgruppe bestehen oder diese umfassen. Die vorstehend genannten Nummern definieren Stähle, wie sie aus der sogenannten Nomenklatur "Stahlschlüssel" bekannt sind.

Die erläuterte Erfindung ist anhand einer Kühlwalze beschrieben worden, wie sie insbesondere für eine Flammbehandlung bei der Kunststofffolienherstellung insbesondere in einer Kunststofffolienreckanlage eingesetzt werden kann. Häufig wird insoweit auch von einer Flammbehandlungswalze, insbesondere einer gekühlten Flammbehandlungswalze, gesprochen. Die beschriebene Erfindung kann aber gleichermaßen für jedwede andere Walze oder insbesondere Umlenkwalze mit gleicher oder identischer Oberflächenbeschichtung eingesetzt werden. Derartige Walzen können beispielsweise in aggressiven und korrosiven Umgebungsbedingungen eingesetzt werden, beispielsweise auch dann, wenn Folie verarbeitet werden soll, die korrosiv wirkende Bestandteile wie Chlor oder ähnliches beinhalten. Beispielsweise können derartige korrosiv wirkende Bestandteile nur im äußeren Randbereich einer Folienbahn, beispielsweise im Randbereich von 50 bis 200 mm auftreten. Weitere Abwandlungen und Anwendungen sind insoweit von der Erfindung mit umfasst.

## Patentansprüche

1. Walze mit korrosionsbeständiger Oberflächenschicht, mit folgenden Merkmalen:
- die Walze (5) umfasst zumindest drei in Axialrichtung der Walze (5) versetzt zueinander liegende und in Umfangsrichtung der Walze (5) verlaufende Bereiche, nämlich eine Mittelzone (C), an die sich jeweils zum zugehörigen stirnseitigen Ende der Walze (5) eine Randzone (A, B) anschließt,
**gekennzeichnet durch** die folgenden weiteren Merkmale:
- in der Mittelzone (C) umfasst die Oberfläche oder Mantelfläche (5") der Walze (5) eine Flammspritzschicht in Form einer Metall- oder Carbidschicht und/oder in Form einer aus carbidischem und/oder keramischem Pulver gespritzen Oberflächenschicht und/oder einer Schicht umfassend ein Borid und/oder ein Nitrit, und
- die Randzonen (A, B) umfassen eine direkt auf den Walzen-Grundkörper aufgeschweißte metallische Korrosionsschutzschicht oder eine direkt auf den Wälzen-Grundkörper aufgeschweißte metallische Oberfläche in Form eines Korrosionsschutzbleches.

2. Walze nach Anspruch 1, **dadurch gekennzeichnet, dass** die aufgeschweißte metallische Korrosionsschutzschicht oder das aufgeschweißte Korrosionsschutzblech nur in den Randzonen (A, B) der Walze (5) vorgesehen ist.

3. Walze nach Anspruch 1 oder 2, **dadurch gekennzeichnet, dass** die in den Randzone (A, B) aufgeschweißte metallische Korrosionsschutzschicht oder die in den Randzonen (A, B) aufgeschweißte metallische Oberfläche in Form eines Korrosionsschutzbleches aus einem korrosionsfesten und/oder hochwarmfesten nickel- und/oder chromhaltigen Stahl, einem rost- und säurebeständigem Stahl oder einer korrosionsfesten Eisen-, Nickel- oder Cobaltlegierung gebildet ist.

4. Walze nach einem der Ansprüche 1 bis 3, **dadurch gekennzeichnet, dass** die Oberfläche der Mittelzone (C) aus einem korrosionsfesten und/oder hochwarmfesten nickel- und/oder chromhaltigen Stahl, einem rost- und säurebeständigem Stahl oder einer korrosionsfesten Eisen-, Nickel- oder Cobaltlegierung besteht.

5. Walze nach einem der Ansprüche 1 bis 4, **dadurch gekennzeichnet, dass** die Oberfläche der innengekühlten Walze in den Randzonen (A, B) und in der Mittelzone (C) gemeinsam auf eine vorgebbare Oberflächengüte hin überschliffen ist.

6. Walze nach einem der Ansprüche 1 bis 5, **dadurch gekennzeichnet, dass** die Axiallänge der mittleren Zone (C) bezogen auf die Flammbehandlungsstation (1) und/oder die Axiallänge der Brennereinrichtung (3) zumindest 60%, 70%, 80% oder zumindest 90% oder 96% beträgt.

7. Walze nach einem der Ansprüche 1 bis 6, **dadurch gekennzeichnet, dass** die Breite der Mittelzone (C) bezogen auf die Axiallänge der Walze (5) zumindest 50%, 60%, 70% oder zumindest 80% beträgt.

8. Walze nach einem der Ansprüche 1 bis 7, **dadurch gekennzeichnet, dass** die axiale Länge der Randzonen (A) und/oder der Abstand, an welchem die Randzone (A) gemessen vom stirnseitigen Ende (15') der Walze (5) aus endet, zumindest jeweils 2% oder zumindest 5%, 10%, 15% oder zumindest 20% der Axiallänge der Walze (5) oder der Axiallänge der Flammbehandlungsstation (1) oder der Axiallänge der Brennereinrichtung (3) beträgt.

9. Walze nach einem der Ansprüche 1 bis 8, **dadurch gekennzeichnet, dass** die Oberfläche der Randzone (A, B) aus einer schweißbaren nickel- und chromhaltigen Stahllegierung 316L, 317L oder einer korrosionsbeständigen und/oder hochwarmfesten und/oder schweißbaren Eisen-, Nickel- oder Cobaltbasislegierung Inconel 605, Inconel 622, Inconel 625, Inconel 686, Inconel 718, Inconel 738 oder Hastelloy C22, Hastelloy C276, Hastelloy C2000, Hastelloy X oder Metco 18C, Metco 15E, Metco 15F oder Triballoy 400, Triballoy 800 oder Stellit F, Stellit 6 Stellit 12 oder Superferrit 446 oder Carpenter 20, Carpenter 22 oder Haynes 25 besteht oder diese umfasst.

10. Walze nach Anspruch 9, **dadurch gekennzeichnet, dass** die Oberfläche der Randzone (A, B) aus einer schweißbaren chrom- oder nickelhaltigen Stahllegierung oder einer Eisen-, Nickel- oder Cobaltbasislegierung besteht und dabei eine Partikelverstärkung umfasst, wobei die Partikelverstärkung carbidische, nitridische, boridische und/oder keramische Pulvermaterialien umfasst.

11. Walze nach einem der Ansprüche 1 bis 10, **dadurch gekennzeichnet, dass** die Oberfläche der Randzone (A, B) in Form eines Schutzbleches aus einem rost- und säurebeständigen Stahl der Typen 1.4301, 1.4303, 1.4401, 1.4404, 1.4406, 1.4438, 1.4505, 1.4506 oder 316L, 317L oder einer korrosionsbeständigen und/oder hochwarmfesten Eisen-, Nickel- oder Cobaltbasislegierungen Inconel 605, Inconel 622, Inconel 625, Inconel 686, Inconel 718, Inconel 738 oder Hastelloy C22, Hastelloy C276, Hastelloy C2000, Hastelloy X oder Metco 18C, Metco 15E, Metco 15F oder Triballoy 400, Triballoy 800 oder Stellit F, Stellit 6 Stellit 12 oder Superferrit 446 oder Carpenter 20, Carpenter 22 oder Haynes 25 oder ähnlichen Werkstoffen dieser Werkstoffgruppe besteht oder diese umfasst.

12. Walze nach einem der Ansprüche 1 bis 11, **dadurch gekennzeichnet,**
(a) **dass** die Oberfläche der Mittelzone (C) aus einer nickel- oder chromhaltigen Legierung oder einer Schicht aus einem carbidischen, nitridischen, boridischen und/oder keramischen Pulver in einer geeigneten metallischen Matrix besteht oder diese umfasst,
und/oder
(b) **dass** die Oberfläche der Mittelzone (C) aus Stahllegierungen 316L, 317L oder einer korrosionsbeständigen und/oder hochwarmfesten Eisen-, Nickel- oder Cobaltbasislegierungen Inconel 605, Inconel 622, Inconel 625, Inconel 686, Inconel 718, Inconel 738 oder Hastelloy C22, Hastelloy C276, Hastelloy C2000, Hastelloy X oder Metco 18C, Metco 15E, Metco 15F oder Triballoy 400, Triballoy 800 oder Stellit F, Stellit 6 Stellit 12 oder Superferrit 446 oder Carpenter 20, Carpenter 22 oder Haynes 25 und/oder aus karbidischem und/oder keramischem Pulver gespritzte Oberflächenschicht, insbesondere eine mittels CrC, TiC, TaC, Cr₃C₂, Fe₃C, WC, Diamant, Niobiumcarbid, Vanadiumcarbid, und/oder Al₂O₃, Cr₂O₃, TiO₂, ZrO₂, und/oder einem Borid und/oder einem Nitrid, insbesondere cBN oder hBN besteht oder diese umfasst.

13. Verfahren zur Herstellung einer Walze nach einem der Ansprüche 1 bis 12, **dadurch gekennzeichnet, dass** auf dem Walzen-Grundkörper in einer Mittelzone (C) mit einer metallischen und/oder carbidischen, nitridischen, boridischen und/oder keramischen Flammspritzschicht beschichtet wird, und dass auf dem walzen-Grundkörper in den zumindest beiden Randzonen (A, B) eine metallische Korrosionsschicht und/oder ein metallisches Korrosionsschutzblech aufgeschweißt wird.

14. Verfahren nach Anspruch 13, **dadurch gekennzeichnet, dass** die Mittelzone (C) und die Randzonen (A, B) nach dem Abschluss der Walzenbeschichtung gemeinsam auf die erforderliche Oberflächengüte und/oder Rauigkeit und/oder Rundlaufgenauigkeit hin überschliffen werden.

15. Verfahren nach Anspruch 13 oder 14, **dadurch gekennzeichnet, dass** als Beschichtungsmaterialien für die geschweißte Oberfläche in den Randzonen (A, B) chrom- oder nickelhaltige Stahllegierungen oder Eisen-, Nickel- oder Cobaltbasislegierungen verwendet werden.

16. Verfahren nach einem der Ansprüche 13 bis 15, **dadurch gekennzeichnet, dass** für die in der Mittelzone (C) vorgesehene flammgespritzte Oberfläche nickel- und/oder chromhaltige Stahllegierungen und/oder carbidische, nitridische, boridische und/oder keramische Pulver verwendet werden.

17. Verfahren nach einem der Ansprüche 13 bis 16, **dadurch gekennzeichnet, dass** das Flammspritzen als Hochgeschwindigkeitsflammspritzen oder Detonationsspritzen durchgeführt wird.

18. Verfahren nach einem der Ansprüche 13 bis 17, **dadurch gekennzeichnet, dass** als Schweißverfahren MAG, WIG oder PTA oder Laserauftragsschweißen oder Laserdensifizieren zur Anwendung kommen.

19. Verwendung einer Walze nach einem der Ansprüche 1 bis 12, **dadurch gekennzeichnet, dass** eine Walze (5) verwendet wird, deren Randzone (A) um ein Axialmaß (B) verlängert ist, in welchem sich eine Überlappung mit einem mittels der Walze (5) herzustellenden Kunststofffolienfilm (9) ergibt.

20. Verwendung nach Anspruch 19, **dadurch gekennzeichnet, dass** eine Walze (5) verwendet wird, deren Axiallänge in der mittleren Zone (C) bezogen auf die Breite der Folienbahn (9) zumindest 60%, 70%, 80% oder zumindest 90% oder 96% beträgt.

21. Verwendung nach Anspruch 19 oder 20, **dadurch gekennzeichnet, dass** eine Walze (5) verwendet wird, bei der die axiale Länge der Randzone (A) und/oder der Abstand, an welchem die Randzone (A) gemessen von stirnseitigen Ende (15) der Walze (5) aus endet, zumindest jeweils 2% oder zumindest 5%, 10%, 15% oder zumindest 20% der Breite des Kunststofffolienfilms (9) beträgt.

## Claims

1. Roll with corrosion-resistant surface coating with the following features:
- the roll (5) comprises at least three areas lying offset to each other in the axial direction of the roll (5) and running in the circumferential direction of the roll (5), namely a centre zone (C), next to which lies an edge zone (A, B) allocated to each end of the roll (5),
**characterised by** the following further features:
- in the centre zone (C) the surface or casing surface (5'') of the roll (5) comprises a flame-spray coating in the form of a metal or carbide layer and/or in the form of a surface coating sprayed from a carbide and/or ceramic powder and/or a layer comprising a boride and/or a nitrite, and
- the edge zones (A, B) comprise a metallic corrosion-protection layer welded directly onto the roll base body or a metallic surface welded directly onto the roll base body in the form of a corrosion protection sheet.

2. Roll according to Claim 1, **characterised in that** the welded metallic corrosion-protection layer or welded corrosion-protection sheet is provided only in the edge zones (A, B) of the roll (5).

3. Roll according to Claim 1 or 2, **characterised in that** the metallic corrosion-protection layer welded in the edge zones (A, B) or the metallic surface welded in the edge zones (A, B) in the form of a corrosion protection sheet is formed from a corrosion-resistant and/or high heat-resistant nickel and/or chromium-containing steel, a rust and acid-resistant steel or a corrosion-resistant iron, nickel or cobalt alloy.

4. Roll according to any one of Claims 1 to 3,
**characterised in that** the surface of the centre zone (C) comprises a corrosion-resistant and/or high heat-resistant nickel and/or chromium-containing steel, a rust and acid-resistant steel or a corrosion-resistant iron, nickel or cobalt alloy.

5. Roll according to any one of Claims 1 to 4,
**characterised in that** the surface of the internally cooled roll in the edge zones (A, B) and in the centre zone (C) together is ground down to a specifiable surface quality.

6. Roll according to any one of Claims 1 to 5,
**characterised in that** the axial length of the centre zone (C) in relation to the flame treatment station (1) and/or the axial length of the burner device (3) is at least 60%, 70%, 80% or at least 90% or 96%.

7. Roll according to any one of Claims 1 to 6,
**characterised in that** the width of the centre zone (C) in relation to the axial length of the roll (5) is at least 50%, 60%, 70% or at least 80%.

8. Roll according to any one of Claims 1 to 7,
**characterised in that** the axial length of the edge zone (A) and/or the distance at which the edge zone (A) terminates measured from the end (15') of the roll (5), amounts to at least 2% or at least 5%, 10%, 15% or at least 20% of the axial length of the roll (5) or the axial length of the flame treatment station (1) or the axial length of the burner device (3).

9. Roll according to any one of Claims 1 to 8,
**characterised in that** the surface of the edge zone (A, B) consists of or comprises a weldable nickel and chromium-containing steel alloy 316L, 317L or a corrosion-resistant and/or high heat-resistant and/or weldable iron, nickel or cobalt-based alloy Inconel 605, Inconel 622, Inconel 625, Inconel 686, Inconel 718, Inconel 738 or Hastelloy C22, Hastelloy C276, Hastelloy C2000, Hastelloy X or Metco 18C, Metco 15E, Metco 15F, or Triballoy 400, Triballoy 800 or Stellit F, Stellit 6, Stellit 12 or Superferrit 446 or Carpenter 20, Carpenter 22 or Haynes 25.

10. Roll according to Claim 9, **characterised in that** the surface of the edge zone (A, B) consists of a weldable chromium or nickel-containing steel alloy or an iron, nickel or cobalt-based alloy and comprises a particle reinforcement, wherein the particle reinforcement comprises carbide, nitride, boride and/or ceramic powder materials.

11. Roll according to any one of Claims 1 to 10,
**characterised in that** the surface of the edge zone (A, B) in the form of a protective sheet consists of or comprises a rust and acid-resistant steel of types 1.4301, 1.4303, 1.4401, 1.4404, 1.4406, 1.4438, 1.4505, 1.4506 or 316L, 317L or a corrosion-resistant and/or high heat-resistant iron, nickel or cobalt-based alloy Inconel 605, Inconel 622, Inconel 625, Inconel 686, Inconel 718, Inconel 738 or Hastelloy C22, Hastelloy C276, Hastelloy C2000, Hastelloy X or Metco 18C, Metco 15E, Metco 15F, or Triballoy 400, Triballoy 800 or Stellit F, Stellit 6, Stellit 12 or Superferrit 446 or Carpenter 20, Carpenter 22 or Haynes 25 or similar materials of this material group.

12. Roll according to any one of Claims 1 to 11,
**characterised in that**
a) the surface of the centre zone (C) consists of or comprises a nickel or chromium-containing alloy or a layer of a carbide, nitride, boride and/or ceramic powder in a suitable metallic matrix, and/or
b) the surface of the centre zone (C) consists of or comprises steel alloys 316L, 317L or a corrosion-resistant and/or high heat-resistant iron, nickel or cobalt-based alloy Inconel 605, Inconel 622, Inconel 625, Inconel 686, Inconel 718, Inconel 738 or Hastelloy C22, Hastelloy C276, Hastelloy C2000, Hastelloy X or Metco 18C, Metco 15E, Metco 15F or Triballoy 400, Triballoy 800 or Stellit F, Stellit 6, Stellit 12 or Superferrit 446 or Carpenter 20, Carpenter 22 or Haynes 25 and/or a surface layer sprayed from carbide and/or ceramic powder, in particular applied by means of CrC, TiC, TaC, Cr₃C₂, Fe₃C, WC, diamond, niobium carbide, vanadium carbide and/or Al₂O₃, Cr₂O₃, TiO₂, ZrO₂ and/or a boride and/or a nitride, in particular cBN or hBN.

13. Method for production of a roll according to any one of Claims 1 to 12, **characterised in that** the roll base body in a centre zone (C) is coated with a metallic and/or carbide, nitride, boride and/or ceramic flame-spray coating, and **in that** on the roll base body in the at least two edge zones (A, B) a metallic corrosion layer and/or a metallic corrosion-protection sheet is welded.

14. Method according to Claim 13, **characterised in that** the centre zone (C) and the edge zones (A, B), after completion of the roll coating, are together ground to the necessary surface quality and/or roughness and/or roundness precision.

15. Method according to Claim 13 or 14, **characterised in that** as coating materials for the welded surface in the edge zones (A, B), chromium or nickel-containing steel alloys or iron, nickel or cobalt-based alloys are used.

16. Method according to any one of Claims 13 to 15,
**characterised in that** for the flame-sprayed surface provided in the centre zone (C), nickel and/or chromium-containing steel alloys and/or carbide, nitride, boride and/or ceramic powder are used.

17. Method according to any one of Claims 13 to 16,
**characterised in that** the flame spraying is performed as high speed flame spraying or detonation spraying.

18. Method according to any one of Claims 13 to 17,
**characterised in that** as a welding method MAG, WIG or PTA or laser application welding or laser densification are used.

19. Use of a roll according to any one of Claims 1 to 12,
**characterised in that** a roll (5) is used, the edge zone (A) of which is extended by an axial dimension (B) in which an overlap arises with a plastic film (9) to be produced by means of the roll (5).

20. Use according to Claim 19, **characterised in that** a roll (5) is used, the axial length of which in the centre zone (C) in relation to the width of the film strip (9) amounts to at least 60%, 70%, 80% or at least 90% or 96%.

21. Use according to Claim 19 or 20, **characterised in that** a roll (5) is used in which the axial length of the edge zone (A) and/or the distance at which the edge zone (A) terminates measured from the end (15) of the roll (5), amounts to at least 2% or at least 5%, 10%, 15% or at least 20% of the width of the plastic film (9).

## Revendications

1. Cylindre comportant une couche superficielle résistante à la corrosion, présentant les éléments suivants :
- le cylindre (5) comprend au moins trois zones, situées en décalage les unes par rapport aux autres en direction axiale du cylindre (5) et s'étendant en direction périphérique du cylindre (5), à savoir une zone médiane (C), à laquelle se raccordent des zones de bordure (A, B) à l'extrémité frontale associée respective du cylindre (5),
**caractérisé par** les caractéristiques suivantes :
- dans la zone médiane (C), la superficie ou la surface enveloppe (5") du cylindre (5) comporte une couche pulvérisée à la flamme, sous la forme d'une couche de métal ou de carbure et/ou sous la forme d'une couche superficielle pulvérisée avec une poudre de carbure et/ou de céramique, et/ou d'une couche qui comprend un borure et/ou un nitrure, et
- les zones de bordure (A, B) comprennent une couche de protection anticorrosion métallique rapportée directement par soudure sur le corps de base du cylindre, ou une surface métallique, rapportée directement par soudure sur le corps de base du cylindre, sous la forme d'une tôle de protection anticorrosion.

2. Cylindre selon la revendication 1, **caractérisé en ce que** la couche de protection anticorrosion métallique soudée ou la tôle de protection anticorrosion soudée n'est prévue que dans les zones de bordure (A, B) du cylindre (5).

3. Cylindre selon la revendication 1 ou 2, **caractérisé en ce que** la couche de protection anticorrosion métallique rapportée par soudure dans les zones de bordure (A, B) ou la surface métallique rapportée par soudure dans les zones de bordure (A, B) sous la forme d'une tôle de protection anticorrosion, est formée en un acier contenant du nickel et/ou du chrome résistant à la corrosion et/ou résistant aux hautes températures, en un acier résistant à l'oxydation et aux acides, ou en un alliage de fer, de nickel ou de cobalt résistant à la corrosion.

4. Cylindre selon l'une des revendications 1 à 3, **caractérisé en ce que** la surface de la zone médiane (C) est en acier contenant du nickel et/ou du chrome résistant à la corrosion et/ou résistant aux températures, en un acier résistant à l'oxydation et aux acides, ou en un alliage de fer, de nickel ou de cobalt résistant à la corrosion.

5. Cylindre selon l'une des revendications 11 4, **caractérisé en ce que** la surface du cylindre, refroidi à l'intérieur, est meulée, conjointement dans les zones de bordure (A, B) et dans la zone médiane (C), à une qualité de surface prédéterminée.

6. Cylindre selon l'une des revendications 1 à 5, **caractérisé en ce que** la longueur axiale de la zone médiane (C), rapportée à la station de traitement à la flamme (1) et/ou à la longueur axiale du système à brûleur (3), s'élève à au moins 60 %, 70 %, 80 %, ou au moins à 90 % ou 96 %.

7. Cylindre selon l'une des revendications 1 à 6, **caractérisé en ce que** la largeur de la zone médiane (C), rapportée à la longueur axiale du cylindre (5), s'élève à au moins 50 %, 60 %, 70 % ou au moins 80 %.

8. Cylindre selon l'une des revendications 1 à 7, **caractérisé en ce que** la longueur axiale des zones de bordure (A) et/ou la distance, à laquelle se termine la zone de bordure (A), mesurée depuis l'extrémité frontale (15') du cylindre (5) s'élève à au moins 2 % ou au moins 5 %, 10 %, 15 % ou au moins 20 % de la longueur axiale du cylindre (5) ou de la longueur axiale de la station de traitement à la flamme (1) ou de la longueur axiale du système de brûleur (3).

9. Cylindre selon l'une des revendications 1 à 8, **caractérisé en ce que** la surface des zones de bordure (A, B) est réalisée en ou comprend un alliage d'acier contenant du nickel et du chrome et capable d'être soudé des nuances 316L, 317L, ou un alliage à base de fer, de nickel ou de cobalt résistant à la corrosion et/ou résistant aux températures et/ou capable d'être soudé, des types Inconel 605, Inconel 622, Inconel 625, Inconel 686, Inconel 718, Inconel 738, Hastelloy C22, Hastelloy C276, Hastelloy C2000, Hastelloy X ou Metco 18C, Metco 15E, Metco 15F ou Triballoy 400, Triballoy 800, ou Stellite F, Stellite 6, Stellite 12, ou bien Superferrite 446 ou Carpenter 20, Carpenter 22 ou Haynes 25.

10. Cylindre selon la revendication 9, **caractérisé en ce que** la surface des zones de bordure (A, B) est en alliage d'acier contenant du chrome ou du nickel et capable d'être soudé, ou en alliage à base de fer, de nickel ou de cobalt, et comprend un renforcement en particules, le renforcement en particules comprenant des matériaux en poudre de carbure, de nitrure, de borure et/ou de céramique.

11. Cylindre selon l'une des revendications 1 à 10, **caractérisé en ce que** la surface des zones de bordure (A, B) est sous la forme d'une tôle de protection en acier résistant à l'oxydation et aux acides, des types 1.4301, 1.4303, 1.4401, 1.4404, 1.4406, 1.4438, 1.4505, 1.4506 ou 316L, 317L, ou un alliage de fer, de nickel ou de cobalt résistant à la corrosion et/ou résistant aux hautes températures, du type Inconel 605, Inconel 622, Inconel 625, Inconel 686, Inconel 718, Inconel 738, Hastelloy C22, Hastelloy C276, Hastelloy C2000, Hastelloy X ou Metco 18C, Metco 15E, Metco 15F ou Triballoy 400, Triballoy 800, ou Stellite F, Stellite 6, Stellite 12, ou bien Superferrite 446 ou Carpenter 20, Carpenter 22 ou Haynes 25, ou des matériaux analogues de ce groupe de matériaux.

12. Cylindre selon l'une des revendications 1 à 11, **caractérisé en ce que :**
(a) la surface de la zone médiane (C) est réalisée en ou comprend un alliage contenant du nickel ou du chrome, ou une couche de poudre de carbure, de nitrure, de borure et/ou de céramique dans une matrice métallique appropriée, et/ou
(b) la surface de la zone médiane (C) est réalisé en ou comprend des alliages d'acier 316 L, 317 L, où des alliages à base de fer, de nickel ou de cobalt résistant à l'accord osions et/ou résistant aux hautes températures, des types Inconel 605, Inconel 622, Inconel 625, Inconel 686, Inconel 718, Inconel 738, Hastelloy C22, Hastelloy C276, Hastelloy C2000, Hastelloy X ou Metco 18C, Metco 15E, Metco 15F ou Triballoy 400, Triballoy 800, ou Stellite F, Stellite 6, Stellite 12, ou bien Superferrite 446 ou Carpenter 20, Carpenter 22 ou Haynes 25, et/ou une couche de surface en poudre de carbure et/ou de céramique pulvérisée, en particulier CrC, TiC, TaC, Cr₃C₂, Fe₃C, WC, diamant, carbure de niobium, carbure de vanadium, et/ou Al₂O₃, Cr₂O₃, TiO₂, ZrO₂, et/ou un borure et/ou un nitrure, en particulier cBN ou hBN.

13. Procédé pour fabriquer un cylindre selon l'une des revendications 1 à 12, **caractérisé en ce que**, sur le corps de base de cylindre et dans une zone médiane (C), en applique une couche métallique et/ou de carbure, de nitrure, de borure et/ou de céramique, par pulvérisation à la flamme, et **en ce que** sur le corps de base de cylindre, dans les deux zones de bordure au moins (A, B) on rapporte par soudure une couche anticorrosion métallique et/ou une tôle de protection anticorrosion métallique.

14. Procédé selon la revendication 13, **caractérisé en ce que** la zone médiane (C) et les zones de bordure (A, B) sont meulées, après terminaison du revêtement du cylindre, conjointement à la qualité de surface requise et/ou avec la rugosité requise et/ou l'exactitude de centrage requise.

15. Procédé selon la revendication 13 ou 14, **caractérisé en ce que** l'on utilise, à titre de matériau de revêtement pour la surface rapportée par soudure dans les zones de bordure (A, B), des alliages d'acier contenant du chrome ou du nickel, ou des alliages à base de fer, de nickel ou de cobalt.

16. Procédé selon l'une des revendications 13 à 15, **caractérisé en ce que** pour la surface pulvérisée à la flamme est prévu dans la zone médiane (C) on utilise des alliages d'acier contenant du nickel et/ou du chrome, et/ou des poudres de carbure, de nitrure, de borure et/ou de céramique.

17. Procédé selon l'une des revendications 13 à 16, **caractérisé en ce que** la pulvérisation à la flamme est exécutée sous forme de pulvérisation à la flamme à haute vitesse ou par pulvérisation par détonation.

18. Procédé selon l'une des revendications 13 à 17, **caractérisé en ce que** l'on applique comme procédé de soudure les procédés MAG, WIG ou PTA, ou la soudure par application au laser, ou la densification au laser.

19. Utilisation d'un cylindre selon l'une des revendications 1 à 12, **caractérisée en ce que** l'on utilise un cylindre (5) dont la zone de bordure (A) est prolongée d'une longueur axiale (B) dans laquelle résulte un chevauchement avec un film en matière plastique (9) à produire au moyen du cylindre. (5).

20. Utilisation selon la revendication 19, **caractérisée en ce que** l'on utilise un cylindre (5) dont la longueur axiale dans la zone médiane (C), par référence à la largeur de la bande de film (9), s'élève à au moins 60 %, 70 %, 80 %, ou au moins 90 % ou 96 %.

21. Utilisation selon la revendication 19 ou 20, **caractérisée en ce que** l'on utilise un cylindre (5) dans lequel la longueur axiale de la zone de bordure (A) et/ou la distance à laquelle la zone de bordure (A) se termine, mesurée depuis l'extrémité frontale (15) du cylindre (5), s'élève à au moins respectivement 2 % ou au moins 5 %, 10 %, 15 % ou au moins 20 % de la largeur du film en matière plastique (9).
